Europäisches Patentamt

(19) European Patent Office

Office européen des brevets

(11) Publication number: **0 011 327**
**B1**

(12) **EUROPEAN PATENT SPECIFICATION**

(45) Date of publication of patent specification: **28.07.82**

(51) Int. Cl.³: **C 02 F  1/00, A 61 L  11/00, C 08 L  71/02**

(21) Application number: **79200625.6**

(22) Date of filing: **29.10.79**

(54) **Method of reducing aerosolization of wastewater.**

(30) Priority: **09.11.78 US  959405** .

(43) Date of publication of application:
**28.05.80 Bulletin 80/11** .

(45) Publication of the grant of the patent:
**28.07.82 Bulletin 82/30** .

(84) Designated Contracting States:
**BE DE FR GB IT NL**

(56) References cited:
**DE - A - 2 602 514**
**GB - A - 743 882**
**US - A - 4 104 033**

(73) Proprietor: **THE PROCTER & GAMBLE COMPANY**
**301 East Sixth Street**
**Cincinnati Ohio 45202 (US)**

(72) Inventor: **McCune, Homer Wallace**
**580 Larchmont Drive Wyoming Ohio 45215**
**Springfield Twp. Hamilton (US)**

(74) Representative: **Ernst, Hubert et al,**
**PROCTER & GAMBLE EUROPEAN TECHNICAL**
**CENTER Temselaan 100**
**B-1820 Strombeek-Bever (BE)**

Courier Press, Leamington Spa, England.

Method of reducing aerosolization of wastewater

Technical field

The present invention relates to the treatment of wastewater which contains human waste, so as to reduce the aerosolization which can occur when said wastewater is subjected to turbulence, as for example, in the flushing of toilets or in secondary sewage treatment facilities. This is accomplished by incorporating into the wastewater from 1ppm to 30 ppm of a water-soluble poly(ethylene oxide) polymer having a molecular weight of 100,000 to 7,000,000. All concentrations are in parts by weight (e.g. ppm.).

Background art

The agitation of aqueous systems which contain microbes produces aerosol particles which contain the microbes. Aerosol particles, as commonly designated, include the true aerosol particles of from a few nanometres to about 1 micrometres in diameter, and larger particles which can have diameters of more than 100 micrometres. (See *Encyclopaedia Britainnica, Micropaedia*, Vol. I, page 114, 15th Ed., 1975) These aerosol particles, are forcefully ejected from the aqueous systems by agitation and can be subsequently carried by air currents, whereupon they can enter the human body through respiration or through hand-to-mouth contact with surfaces upon which the particles eventually settle. Bayloy et al., *Science*, 198, pp. 575—580, November 1977, report that virus is transferred from sea water into the surrounding air by aerosolization from the surf, and that the concentration of virus in the aerosol is greater than in the main body of sea water. They indicate that this has public health implications in regions where sewage is dumped into coastal waters.

Gerba et al. in *Applied Microbiology* 30,2:pp. 229—237 (1975) describe a study in which it was found that bacteria and virus seeded into toilet bowls appeared in aerosol droplets produced by the toilet during flushing, and that these droplets remained airborne long enough to settle on surfaces throughout the bathroom.

From the foregoing it is apparent that a reduction in aerosolization from waste-water containing human waste is desirable as a means of reducing the potential for disease transmission from said wastewater.

It is an object of the present invention to reduce the potential for disease transmission from wastewater by incorporating into said wastewater a material which reduces the tendency of the wastewater to form aerosol particles when subjected to turbulence.

It is a further object of the invention to reduce the potential for disease transmission from flushing toilets by dispensing into the flush water an agent which reduces aerosolization.

It is a further object of the invention to reduce the potential for disease transmission from aerated or agitated sewage treatment processes by incorporating an agent which reduces aerosolization into the wastewater which is treated by such processes.

The attainment of these and other objects will be apparent from the following description.

Disclosure of invention

In accordance with the present invention, the incorporation of levels of from 1 ppm to 30 ppm (preferably from 3 to 15 ppm) of high molecular weight, water-soluble poly(ethylene oxide) resins into wastewater significantly reduces the tendency of the wastewater to aerosolize when subjected to turbulence, as in the flushing of toilets or in the agitation or aeration of sewage in a sewage treatment facility.

The aerosol reduction agents utilized in the practice of the present invention are water-soluble poly(ethylene oxide) resins having molecular weights of from 100,000 to 7,000,000. The preferred molecular weight range is from 1,000,000 to 7,000,000. These polymeric resins are commercially available under the trade name Polyox[R] from Union Carbide Corporation. They can be prepared by the polymerization of ethylene oxide, utilizing an alkaline earth metal oxide as catalyst.

Technical Service Bulletin LF 42518 published by Union Carbide Corporation in 1973 indicates that the Polyox resins, when incorporated into aqueous grinding and cutting fluids at levels of 50—100 ppm, are effective in reducing mists (i.e., aerosolization) from these aqueous systems. Bulletin F—43273 published by Union Carbide Corporation in 1971 discloses the use of 10—30 ppm Polyox resin in water passing through conduits such as storm sewers and fire hoses in order to reduce hydrodynamic drag and thereby increase the rate of flow through the conduit. It does not appear that the prior art has heretofore recognized that levels of high molecular weight, water-soluble poly(ethylene oxide) resins as low as 1—30 ppm are effective in reducing aerosolization of aqueous systems such as wastewater. The term "wastewater" as used herein means water which contains human body waste, i.e., fecal matter or urine.

The present invention in its broadest aspect comprises a method for reducing aerosolization of wastewater which is subjected to turbulence, said method comprising the step of incorporating into said wastewater from 1 ppm to 30 ppm (preferably from 3 ppm to 15 ppm of a water-soluble poly(ethylene oxide) resin having a molecular weight of from 100,000 to 7,000,000, preferably from 1,000,000 to 7,000,000, and most preferably from 1,000,000 to 5,000,000. The poly(ethylene oxide) resin can be incorporated into the water prior to the introduction of the human waste or afterwards. The important point is that the resin be present with the waste in the wastewater prior to the time the wastewater is subjected to turbulence.

The present invention not only reduces the formation of aerosol particles having diameters of up to about 100 micrometres, as described hereinabove; it also reduces the formation of larger size particles such as jet droplets which have diameters of up to about 1500 micrometres, and even splashes. For convenience in describing the present invention, the term "aerosolization" is used in a general sense to refer to the formation and expulsion into the air of particles caused by the agitation of wastewater, regardless of the size of the particles.

The invention can be used in treating individual toilets to prevent aerosolization during flushing and it can also be utilized in secondary sewage treatment facilities to prevent aerosolization caused by turbulent movement of the sewage, as for example, during aeration or agitation.

In treating individual toilets an appropriate amount of the poly(ethylene oxide) resin can be dispensed directly into the stream of water entering the bowl. In toilets of the usual household type which comprise a flush tank and a bowl, an appropriate amount of the resin can be dissolved in the entire contents of the tank water between flushes. In whatever way the resin is dispensed to the toilet, it is important that the water remaining in the bowl after the flush contain 1—30 ppm of the resin. This ensures that the wastewater which is in the bowl at the beginning of the next succeeding flush will contain sufficient resin to suppress aerosolization. This can be accomplished by having the required amount of resin present in all or substantially all of the water which is used to flush the toilet (for example, in a tank-type toilet, the required amount of resin can be dissolved in the tank water between flushes) or, alternatively, it can be accomplished by directly dispensing a sufficient amount of resin to the bowl during the flush or at the end of the flush so as to produce 1—30 ppm of resin in the bowl after the flush cycle is completed.

In a typical household toilet equipped with a flush tank, the water in the tank flows into the bowl through a flapper valve during the flush cycle. While water is flowing out of the tank new water is entering the tank from the household water supply and some of this new water will flow through the flapper valve into the bowl before the flapper valve closes. Also some new water will flow directly into the bowl through the standpipe during the flush cycle. If, in practicing the present invention, the poly(ethylene oxide) resin is dispensed into the bowl by dissolving it in the water in the flush tank between flushes, it is apparent that because of the "new" water which is introduced during the next flush, the concentration in the tank should be higher than the target concentration for the bowl. The bowl water subsequent to each flush is comprised of from 10% to 65% original tank water, the remainder being "new" water. Accordingly, the concentration of resin in the tank water should be from about 1.5 to 10 times the concentration desired in the bowl, depending upon the model and operating conditions of tank-type toilet used. Alternatively, the resin can be dispensed *late* in the flush cycle to attain more efficient dispensing of the resin, i.e., less of the newly added resin will be flushed from the bowl during the time it is being added to the bowl and there will be less dilution by incoming water.

In the treatment of toilets, the poly(ethylene oxide) resins of the present invention can be used in conjunction with other agents which are conventionally used to treat the toilet. Such agents include, for example, dyes, perfumes, sanitizers such as sodium hypochlorite and cetyl pyridinium chloride, surfactants such as the alkali metal and ammonium salts of $C_{12}$ to $C_{18}$ alkyl sulfates, alkyl sulfonates and alkylbenzene sulfonates and the reaction products of 10 to 30 moles of ethylene oxide with a hydrophobic base such as a $C_{10}$ to $C_{20}$ alcohol or a ($C_6$ to $C_{12}$ alkyl) phenol, and detergency builder salts such as alkali metal phosphates, pyrophosphates, carbonates and silicates.

In sewage treatment plants wastewater is first subjected to a "primary" treatment which involves settling of solids. The wastewater is then put through a "secondary" treatment to remove finely divided or dissolved organics. In the secondary treatment a biologically active floc or slime is utilized in an aerobic process to convert the soluble organics into insoluble biomass through sorption and metabolism by the microbial population in the floc or slime. Two basic processes are used in secondary treatment. These are:

(a) The trickling filter process, which involves spraying the wastewater, via a rotating arm, over a substrate which is rich in biological film to remove the soluble organics.

(b) The activated-sludge process, which involves aeration of a biological floc to remove soluble organics by precipitation with the floc.

Both of these secondary treatment processes, as well as variety of similar aerated or agitated secondary treatment systems, involve subjecting the wastewater to turbulence, and thereby produce aerosolization. The aerosol which is produced is rich in microbes, including bacterial and viral pathogens which have not been subject to either removal or kill in the primary treatment. In the practice of the present invention the poly(ethylene oxide) resin is introduced (e.g., by a metering device) into the wastewater upstream of the secondary treatment unit so as to obtain a level of 1 to 30 ppm of resin in the wastewater.

The water-soluble poly(ethylene oxide) resins of the present invention are sold commerically in the form of granular powders which are freely soluble in water. In the practice of the present invention the granular resin can be added directly to the wastewater or to water which will subsequently contain waste, however, in order to provide ease of handling and metering and to facilitate the rapid attainment of uniform concentration in the wastewater, it is preferred that the resin be predissolved in water or predispersed in an inorganic salt solution or in an organic solvent, before addition to the wastewater. High shear mixing should be avoided in dissolving or dispersing the resin, since this can result in degradation of the polymer molecule (See Union Carbide Corporation Bulletin F—42933. "How to Dissolve POLYOX Water-Soluble Resin", published in May 1970, and incorporated by reference herein).

The invention will be illustrated by the following examples:

Example I

This experiment illustrates the effectiveness of a representative poly(ethylene oxide) resin of the invention in suppressing the formation of microbe-containing aerosols during toilet flushing.

The experiment is conducted with an American Standard Cadet Toilet which is fitted with a hollow cubical chamber which has base dimensions of 67.3 cm×62.2 cm, and is 52.7 cm in height (all dimensions are interior). The chamber is made of clear plexiglass and has an opening in its bottom wall (base) which is of the same size and shape as the rim of the toilet bowl. This chamber rests on top of the toilet bowl, thereby providing an enclosed volume of air above the bowl in which aerosol particles from the bowl can be trapped.

Prior to flushing, the water in the bowl is innoculated with MS—2 bacteriophage, a virus which destroys E. Coli bacteria. Clean petri dishes are placed on the interior bottom surface of the chamber (i.e., the surface which surrounds, and is parallel to, the rim of the toilet bowl). When the toilet is flushed, aerosol particles containing the MS—2 bacteriophage, rise into the chamber and settle on the petri dishes. Each petri dish is then overlaid with a soft agar medium containing E. Coli, and the culture is incubated to form a lawn of E. Coli cells on the dish. At each point where an MS—2 phage has landed on the petri dish, there remains a small visible void in the lawn of E. Coli which is formed, due to destruction of E. Coli by the MS—2 phage. These voids are counted, and their number provides a measure of the amount of aerosolization which occurred during the flush. The procedure used for preparing MS—2 bacteriophage was substantially the same as described at Pages 3 to 9 of Experiments in Microbiological Genetics, Clowes and Hayes;

John Wiley & Sons, Inc., New York (1968), incorporated by reference herein.

Details of the aerosolization test procedure are as follows:

1. Tryptacase Soy-Salt broth is innoculated with E. Coli about three hours prior to the experiment and is incubated with agitation at 37°C.

2. Thirty-three 5 ml. Trypticase Soy-Salt soft agar tubes are melted and held in a water bath at 47°C.

3. Thirty-three 90 mm.×90 mm. square petri dishes are labelled, and if necessary, placed in an inverted position in a 37°C incubator to ensure that the plates are free of condensation water.

4. The toilet bowl is cleaned with Clorox[R] (a product of The Clorox Company). This is done by pouring one-half cup (about 119 ml.) of Clorox into the bowl, brushing the entire interior of the bowl, waiting 10 minutes, and then flushing the toilet. The toilet is then flushed an additional five times.

5. 15 ml. of 0.5% sodium thiosulfate is added to the flush tank, and the toilet is flushed. This procedure is repeated four times in order to ensure that all chlorine has been removed from the system. If an aerosol suppression agent is to be used in the experiment, it is added in the appropriate amount to the tank during each of these four flushes in order to ensure distribution throughout the system. The appropriate amount of aerosol suppression agent is added as the flush is initiated to simulate automatic dispensing. After the fourth flush, 15 ml. of 0.5% thiosulfate is again added to the tank.

6. The interior surfaces of the chamber are cleaned with a 0.47% solution of "Wescodyne," an iodine-based hard surface disinfectant marketed by West Chemical Products Co. The 33 petri dishes (from 3, above) are placed side-by-side on the interior bottom surface of the chamber, and the chamber, without its top in place, is mounted on the toilet bowl.

7. From an MS—2 lysate having a titer of about $10^{11}$ plaque-forming units per ml., the bowl is innoculated to achieve a level of approximately $10^8$ plaque-forming units of bacteriophage per ml. of bowl water. 50 grams of human feces which has been sterilized (by autoclaving) are also added to the bowl.

8. The top is then placed on the chamber.

9. The toilet is flushed, and thirty minutes are allowed to elapse to provide time for the aerosol particles to settle on the petri dishes. When aerosol suppression agent is to be tested, the appropriate amount is added as the flush is initiated to simulate automatic dispensing.

10. The chamber is disassembled and covers are placed on the petri dishes.

11. 0.5 ml. of E. Coli broth culture is added to each molten Trypticase Soy-Salt soft agar tube (from 2, above), the tops are removed from the petri dishes (from 10, above) and each petri dish is overlaid with the contents of a single soft agar tube.

12. The soft agar is allowed to solidify, the petri dishes are inverted, and they are incubated at 37°C overnight (approximately 12—18 hours).

13. After the incubation period, the total number of void spots (plaques) on the petri dishes are counted and recorded.

Using the foregoing experimental technique, tests were run to evaluate the ability of a representative poly(ethylene oxide) of the present invention to suppress the formation of aerosol from the toilet. The material used was Polyox C, a poly(ethylene oxide) having a mean molecular weight of 4—6 million, marketed by Union Carbide Corporation. The Polyox C was added to the system as indicated in Steps 5 and 9 (above) by dispensing 0.080 grams of the material as a saturated NaCl suspension in the flush tank during each flush. This produces a concentration of about 3—5 ppm Polyox C in the bowl. The Polyox C concentration actually produced in the bowl was determined by analysis of the bowl water after the flush in Step 9. The test was replicated three times. A control, in which no Polyox C was added to the system was also replicated three times. The results are shown in Table I.

TABLE I
Aerosolization Test Results

|  | Polyox C | | |
|  | Run 1 | Run 2 | Run 3 |
| --- | --- | --- | --- |
| Titer in bowl before flushing (plaque-forming units/ml.) | $2.2 \times 10^8$ | $2.6 \times 10^8$ | $4.3 \times 10^8$ |
| Titer in bowl after flushing (plaque-forming units/ml.) | $1.3 \times 10^6$ | $9.4 \times 10^6$ | $1.1 \times 10^6$ |
| Plaques counted on petri dishes | 2 | ND* | ND* |
| Polyox C level in bowl (ppm) | 3.5 | 3.2 | 4.0 |

|  | Without Polyox C | | |
|  | Run 1 | Run 2 | Run 3 |
| --- | --- | --- | --- |
| Titer in bowl before flushing (plaque-forming units/ml.) | $2.4 \times 10^7$ | $2.9 \times 10^8$ | $5.9 \times 10^8$ |
| Titer in bowl after flushing (plaque-forming units/ml.) | $1.5 \times 10^6$ | $7.4 \times 10^6$ | $5.9 \times 10^6$ |
| Plaques counted on petri dishes | 580 | 626 | 735 |

*ND=None detected

These results show clearly the effectiveness of the present invention in suppression of aerosolization of wastewater from the toilet.

Example II

This example illustrates the use of the present invention in the secondary treatment of sewage.

The secondary treatment unit is of the trickling filter type. In this type of unit, wastewater effluent obtained from the primary treatment (sedimentation) unit is distributed over a contact bed in the form of droplets, thin sheets or spreading jets from fixed or rotating spray nozzles which are positioned about 7.62 cm. (3 inches) above the bed, on revolving arms.

The bed comprises broken stone or other contact material which is covered with biological growths.

As the wastewater flows from the primary treatment unit, and prior to the time it is fed to the spray nozzles in the secondary treatment unit, a poly(ethylene oxide) resin having a molecular weight of 5 million is metered into the wastewater. The resin is in the form of a dispersion consisting of 10% by weight of resin in a saturated aqueous NaCl solution. The dispersion is metered into the wastewater at a rate so as to provide a concentration of about 5 ppm resin. Use of the present invention as described in this example results in a significant reduction in aerosolization in the secondary treatment unit compared to the situation where the poly(ethylene oxide) resin is not added to the wastewater.

## Claims

1. A method for reducing aerosolization of wastewater which is subjected to turbulence, said method comprising the step of incorporating into said wastewater from 1 to 30 ppm of a water-soluble poly(ethylene oxide) resin having a molecular weight of from 100,000 to 7,000,000.

2. The method of Claim 1 wherein the water-soluble poly(ethylene oxide) resin has a molecular weight of from 1,000,000 to 7,000,000 and is present at a level of from 3 ppm to 15 ppm.

3. A method of reducing aerosolization of wastewater from a flush toilet during the next succeeding flushing of said toilet, said method comprising the step of dispensing into the bowl of said toilet, prior to the next succeeding use and flushing of said toilet, a sufficient amount of a water-soluble poly(ethylene oxide) resin so as to produce a concentration of said resin of from 1 to 30 ppm in the bowl of said toilet, said resin having a molecular weight of from 100,000 to 7,000,000.

4. The method of Claim 3 wherein the toilet comprises a flush tank and a bowl and wherein the poly(ethylene oxide) resin is dispensed to the water in the flush tank during the flush and is dispensed into the bowl upon flushing of the toilet.

5. The method of Claim 4 wherein the poly(ethylene oxide) resin has a molecular weight of from 1,000,000 to 7,000,000.

6. The method of Claim 5 wherein the concentration of the said poly(ethylene oxide) resin produced in the bowl is from 3 ppm to 15 ppm.

7. A method of reducing aerosolization of wastewater in the secondary treatment of sewage, comprising the step of introducing into the wastewater, upstream of the secondary treatment unit, a sufficient amount of a water-soluble poly(ethylene oxide) resin to produce a concentration of said resin in said wastewater of from 1 to 30 ppm, at the time said wastewater is subjected to secondary treatment, the molecular weight of said resin being from 100,000 to 7,000,000.

8. The method of Claim 7 wherein the poly(ethylene oxide) resin has a molecular weight of from 1,000,000 to 7,000,000.

9. The method of Claim 8 wherein the concentration of said resin in said wastewater is from 3 to 15 ppm.

## Revendications

1. Procédé pour la réduction de la formation d'aérosol ou aérosolisation des eaux résiduaires soumises à une turbulence, ledit procédé comprenant l'étape d'incorporation dans lesdites eaux usées de 1 à 30 ppm d'une résine de poly(oxyde d'éthylène) hydrosoluble possédant une masse moléculaire de 100.000 à 7.000.000.

2. Procédé selon la revendication 1, caractérisé en ce que la résine de poly(oxyde d'éthylène) hydrosoluble possède une masse moléculaire de 1.000.000 à 7.000.000 et est présente à raison de 3 ppm à 15 ppm.

3. Procédé pour la réduction de l'aérosolisation des eaux de rejet des toilettes à chasse d'eau au cours de la chasse suivante desdites toilettes, ledit procédé comprenant l'étape de distribution dans la cuvette desdites toilettes, avant l'utilisation et la chasse suivantes desdites toilettes, d'une quantité suffisante d'une résine de poly(oxyde d'éthylène) hydrosoluble de manière à produire une concentration de ladite résine de 1 à 30 ppm, dans la cuvette des toilettes, ladite résine possédant une masse moléculaire de 100.000 à 7.000.000.

4. Procédé selon la revendication 3, caractérisé en ce que les toilettes comprennent un réservoir de chasse et une cuvette, et la résine de poly(oxyde d'éthylène) est répartie dans l'eau du réservoir de chasse pendant la chasse et introduite dans la cuvette lors de la chasse des toilettes.

5. Procédé selon la revendication 4, caractérisé en ce que la résine de poly(oxyde d'éthylène) possède une masse moléculaire de 1.000.000 à 7.000.000.

6. Procédé selon la revendication 5, caractérisé en ce que la concentration de ladite résine de poly(oxyde d'éthylène) produite dans la cuvette est de 3 ppm à 15 ppm.

7. Procédé pour la réduction de l'aérosolisation des eaux résiduaires lors du traitement secondaire des eaux d'égout comprenant l'étape d'introduction dans les eaux résiduaires, en amont de l'unité de traitement secondaire, d'une quantité suffisante d'une résine de poly(oxyde d'éthylène) pour produire une concentration de ladite résine dans lesdites eaux résiduaires de 1 à 30 ppm au moment où lesdites eaux résiduaires sont soumises au traitement secondaire, la masse moléculaire de ladite résine étant comprise entre 100.000 et 7.000.000.

8. Procédé selon la revendication 7, caractérisé en ce que la résine de poly(oxyde d'éthylène) possède une masse moléculaire de 1.000.000 à 7.000.000.

9. Procédé selon la revendication 8, caractérisé en ce que la concentration de la résine dans les eaux résiduaires est de 3 à 15 ppm.

## Patentansprüche

1. Verfahren zur Verminderung der Aerosolbildung im Abwasser, das Turbulenzen unterworfen ist, dadurch gekennzeichnet, daß dem Abwasser 1 bis 30 ppm eines wasserlöslichen Pol(ethylenoxid)harzes mit einem Molekulargewicht von 100 000 bis 7 000 000 einverleibt werden.

2. Verfahren nach Anspruch 1, worin das wasserlösliche Poly(ethylenoxid)harz ein Molekulargewicht von 1 000 000 bis 7 000 000 aufweist und in einer Menge von 3 ppm bis 15 ppm vorliegt.

3. Verfahren zur Verminderung der Aerosolbildung im Abwasser eines Spülklosetts während des näckstfolgenden Spülens dieses Klosetts, dadurch gekennzeichnet, daß in das Klosettbecken vor der nächstfolgenden Benutzung und Spülung des Klosetts eine Menge eines wasserlöslichen Poly(ethylenoxid)harzes abgegeben wird, die ausreicht, um eine Harzkonzentration von 1 bis 30 ppm im Klosettbecken zu erzeugen, wobei das Harz ein Molekulargewicht von 100 000 bis 7 000 000 aufweist.

4. Verfahren nach Anspruch 3, worin das Klosett einen Spültank und ein Becken enthält und worin das Poly(ethylenoxid)harz an das Wasser im Spültank während des Spülens abgegeben wird und in das Becken beim Spülen des Klosetts abgegeben wird.

5. Verfahren nach Anspruch 4, worin das Poly(ethylenoxid)harz ein Molekulargewicht von 1 000 000 bis 7 000 000 aufweist.

6. Verfahren nach Anspruch 5, worin die in dem Becken erzeugte Konzentration des Poly(ethylenoxid)harzes von 3 ppm bis 15 ppm beträgt.

7. Verfahren zur Verminderung der Aerosolbildung im Abwasser bei der sekundären Behandlung von Abwasser, dadurch gekennzeichnet, daß in das Abwasser stromaufwärts der sekundären Behandlungseinheit eine Menge eines wasserlöslichen Poly(ethylenoxid)harzes eingeführt wird, die ausreicht, um im Abwasser zu dem Zeitpunkt, an dem das Abwasser der sekundären Behandlung unterworfen wird, eine Harzkonzentration von 1 bis 30 ppm zu erzeugen, wobei das Molekulargewicht des Harzes von 100 000 bis 7 000 000 beträgt.

8. Verfahren nach Anspruch 7, worin das Poly(ethylenoxid)harz ein Molekulargewicht von 1 000 000 bis 7 000 000 aufweist.

9. Verfahren nach Anspruch 8, worin die Harzkonzentration im Abwasser von 3 bis 15 ppm beträgt.